# EUROPEAN PATENT APPLICATION

(11) **EP 1 884 536 A1**
(43) Date of publication of application: **06.02.2008**
(21) Application number: 07113450.6
(22) Date of filing: 30.07.2007
(51) Int. Cl.: C08K 3/22, C08K 7/28, C09D 1/02, C09D 133/06, C09D 175/04, C09D 183/04, C09D 5/00, C09D 5/18, C08K 3/40

(54) **Heat-Reflecting Moisture-Proof Coating Paint**

(30) Priority: 31.07.2006 RU 2006127411
(71) Applicant: Bodnarchuk, Bogdan Vasilevich, 124617 Moscow (RU)
(72) Inventor: Bodnarchuk, Bogdan Vasilevich, 124617 Moscow (RU)
(74) Representative: Engel, Christoph Klaus

(57) **Abstract**

The present invention relates to the field of chemical industry and, more particularly, to providing coatings which at the same time offer good heat insulation, anticorrosive (moisture-proof), sound-proofing properties.

A heat-reflecting moisture-proof coating paint is provided, which includes a binding agent selected from the group including silicon resin, acrylic (co)polymers, and polyurethane, high-modulus sodium or potassium glass, titanium dioxide as a loading pigment, hollow microspheres in the form of hollow ceramic or glass microballoons of the size of 20-150 µm, a solvent which comprises water or an organic solvent, and a fire retardant additive, wherein the components are provided in certain ratios. The coating has the operating temperature range of from -60°C to +200°C, heat conductivity of 0.046 Wt/mC, the service life of at least 10 years, and may be applied to various surfaces.

## Description

The present invention relates to the field of chemical industry and, more particularly, to providing coatings for equipment, pipelines, metal, concrete, reinforced concrete, brick, wooden and other building structures of residential, communal and industrial buildings and facilities. More specifically, the invention relates to providing coatings useful for said surfaces and products which at the same time offer heat insulation, sound-proofing, waterproofing properties enabling to extend the field of application of the invention.

High-quality heat-reflecting coatings are critical for a number of applications. For example, it is of the utmost importance for solving the problem of heat insulation heat and water supply pipelines that enduring pipe protection is provided against external corrosion, since it is specifically the main factor shortening the service life thereof. Such coatings are equally important for protecting any building structures made of metal, wood, and the like. At the same time, the problem of conserving heat in residential and industrial construction is certainly one of the high-priority problems and enormous resources are allocated for solving the same. Known in the art is a wide variety of solutions for solving both the first and the second problems. Apart from the well known mineral and basalt cottons and fibers commonly offered at present, various foamed polymer materials are widely used, such as foamed polystyrene, polyethylene, polyurethane, polypropylene, etc. Various paint materials suitable for corrosion protection (aqueous dispersions, organic solvent-based paint materials) are known in the art, as well as the use of corrosion-resisting metals for protecting the metal surfaces, for example, by cold galvanizing. However, no materials exist at present which would provide a combined anticorrosion protection of surfaces and at the same time exhibit good adhesive properties.

Thus, known in the art are liquid glass-based compositions wherein various fillers are used, such as expanded perlite, dolomite (RU2126776, 1999) or hollow microspheres of the heat power plant flue ash (SU1724524, 07.04.1992), or mixtures of glass microspheres with microspheres in the form of coal combustion flue gases with the particle size of 10-300 µm (RU2098379, 10.12.97).

However, all prior art compositions cited above are intended for obtaining heat insulation materials in the form of structures rather than coatings, and therefore have limited applicability, for example, in the form of insulation veneers.

Another composition for obtaining a heat insulation waterproof coating is known in the art, said composition comprising an epoxide resin, a hardening agent for the same, a plasticizer and a glass microspheres with a diameter of 200-300 µm (RU93052300, 1996). The prior art composition provides good mechanical-and-physical and heat insulation properties of the coating, however, it belongs to toxic substances, is unhandy and does not ensure the required level of heat insulation properties for protection, for example, of pipelines.

As noted before, it is commonly known to use various cellular bodies as heat insulation materials and coating. Thus, a composition for obtaining a heat insulation cellular body is known, said composition comprising liquid glass as a binding agent, hollow microspheres as a refractory filler, said microspheres being separated from the flue ash, ash microspheres, and zinc oxides, borate or carbonate, silica powder as reinforcing agents (GB1550184, 1997).

At present, water-based coating materials are widely used as the most environmentally sound products. Thus, for example, a composition is known for obtaining a pipeline corrosion protection coating, said composition comprising latex, quartz sand, latex stabilizer, trisodium phosphate, glass fiber and water (SU1717580, 07.03.1992). However, this composition cannot provide a coating with the required package of heat insulation properties, nor rigorous corrosion protection.

A large variety of insulation materials including heat insulation, sound-proofing and anticorrosive materials are available and known, which are also suitable for coatings which can be obtained using various hollow microspheres.

Thus, known from RU2213714, 10.10.2003 is an insulation refractory material and an aqueous composition for obtaining an insulation refractory material, said composition comprising 20-70 wt. % of ceramic matrix, 5-40 wt. % of insulation microspheres, 0.5-20 wt. % of one or more binding agents, 5-25 wt. % of water, and up to 20 wt. % of colloidal silicon dioxide, the viscosity of said composition being above 8 Pa·s. A matrix made of vitreous granules (grains), for example, made of silicon dioxide may be used as a ceramic matrix.

However, rather than obtaining coatings, this composition is intended for producing a component part, particularly, suitable for pouring molten metal and having a body of refractory material, said body being coated with a material obtained from said composition.

Known from RU3187433, 20.08.2002 is a heat insulation material based on syntactic foam, wherein primary components are dosed, two reactive components of a binder agent are mixed, the resulting composition is filled with microspheres, the resulting component is poured to obtain a heat insulation material which is then hardened, with each of the reactive components of said binder agent being filled with microspheres separately, whereupon the thus filled reactive components of the binder agent are mixed in the following part by weight ratio: a first reactive component and microspheres : a second reactive component and microspheres equal to 1 (0.1-0.4), a first reactive component : microspheres equal to 1 (0.2-0.4), a second reactive component : microspheres equal to 1 (0.2-0.4), and then pouring and hardening is performed. Hollow glass microspheres and/or polymeric microspheres with a hydrostatic strength of at least 2 MPa are used as microspheres. Epoxide resins and hardening agents of amine and/or amide type are used as reactive components.

Said prior art material is intended only for coating the pipe exterior and is quite difficult-to-prepare.

An anticorrosion and heat insulation coating is known from RU2251563, 10.05.2005, said coating being made from insulation which includes a polymeric binding agent and hollow mircospheres and is applied as at least one layer to the surface with subsequent drying of the resulting coating, said coating being made from a water-suspension composition with a viscosity of 1-100 Pa·s, said polymeric binding agent is a water-suspension polymeric latex composition comprising 10-90% of (co)polymer selected from the group consisting of acrylic homopolymer, styrene-acrylic copolymer, butadiene-styrene copolymer, butadiene polymer, vinyl chloride polymer, polyurethane, vinyl acetate polymer or copolymer or mixtures thereof, and 10-90 vol. % of a mixture of water and surfactant, hollow microspheres are a mixture of hollow microspheres of a size varying from 10 to 500 µm and bulk density of from 650 to 50 kg/m³ selected from the group consisting of hollow glass microspheres, hollow polymeric microspheres, hollow man-caused (ash) microspheres or mixtures thereof with the following vol. % ratio between the components of said water-suspension composition:
polymeric latex composition 5-95
hollow microspheres 5-95.

The coating may further include a white pigment, as well as various additives, such as fire retardant additives. The coating has a package of anticorrosion and heat insulation properties, is crack-resistant at temperatures of from -45°C to 150°C.

"Thermal Cjat" heat insulation coating is known, which is available from North West Dryer and Machinery Co., 07.02.2001, 4 pages. The prior art composition includes a mixture of 80% of air-filled ceramic and silicon microbeads immersed in a mixture of latex and acrylic polymer and a pigment to produce basic white color.

The drawback of the prior art coating is its poor mechanical strength caused by insufficient cohesion between the microbead surface and the mixture of butadiene-styrene rubber and acrylic polymer because the microbead surface is for the most part smooth.

Known from RU2206550, 20.06.2003 is a liquid heat insulation coating with a film-forming ability, said coating comprising a composition including uniformly distributed therein and making up at least 51 wt. % of the total amount thereof, a mixture of air-filled ceramic and silicon microbeads in the ratio of 1:1, and carbonaceous microfibers with fibrillae, a mixture of butadiene-styrene rubber and acrylic polymer and at least one pigement, said mixture of microbeads making up 70-75 wt. %, said mixture of microfibers - 5-7 wt. %, and said mixture of rubbers - 30-70 wt. % of the total amount of the mixture of butadiene-styrene rubber and acrylic polymer which corresponds to - 23-60, said mixture of microbeads and microfibers with fibrillae - 19.5-24.6, pigment or pigments - 3.5-5.5, water - the balance, and wherein carbonaceous fibers comprising production waste are used as said microfibers.

However, good heat insulation properties of the composition are achievable provided that least 51% thereof is filled with microspheres and particular fibers are combined, therefore, it is difficult to ensure sufficient stability of the composition for coating; the size of microbeads and microfibers is from 0.07 µm to 0.2 µm. The coating has the following characteristics: rupture strength - 2.4 kgf/mm², heat conductivity - 2,900 erg, no information is provided as to the coating life and its operating temperature range.

It is an object of the present invention to extend the operating temperature range of a coating based on this paint, to extend the service life of the resulting coating.

The above object is achieved by providing a heat-reflecting moisture-proof coating paint which includes binding agents, hollow microspheres, titanium dioxide, and a solvent, wherein said binding agent is selected from the group consisting of silicon resin, acrylic (co)polymers, polyurethane, high-modulus sodium or potassium glass, said hollow microspheres comprise hollow ceramic or glass microballoons of the size of 20-150 µm, said solvent comprises water or an organic solvent, said composition further includes a fire retardant additive, and the components are provided in the following wt. % ratio:
- binding agents - 20-30;
- hollow microspheres - 10-30;
- titanium dioxide - 2-5;
- fire retardant additive - 5-25;
- water or organic solvent - the balance.

Said binding agents used in the paint according to the invention comprise a binding agent selected from the group consisting of silicon resins, high-modulus liquid glass with a modulus of 4 and higher, various water- and organo-soluble acrylic co(polymers) in the form of dispersions, emulsion, as well as organo-soluble and water-dispersible polyurethanes traditionally used for coatings. In particular, polymethylsiloxane resins are use, including but not limited to liquid siloxane rubbers (SKTN-A, SKTN-B), polymethylphenylsiloxane (PMPS) resins (body of varnishes KO-08, KO-915, etc.), polymethylphenylsiloxane rubbers (SKTNF and others); polyurethane resin based on polyethers and diphenylmethane diisocyanates or toluene diisocyanate (for example); acrylic (co)polymers, for example, butyl methacrylate or methyl methacrylate copolymers with (meth)acrylic acid and optionally divinyl, acrylic emulsions, dispersions, for example, based on styrene-acrylic copolymer, etc.

Said organic solvent comprises conventional organic solvents wherein the above listed polymeric binders are dissolved, for example, ethyl acetate, butyl acetate, acetone, toluene, and others, in particular, the paint may comprise methyl methacrylate copolymer, butyl acrylate and methacrylic acid latex MBM-5C, acrylic emulsion AK-211-23, butadiene methylmethacrylate DMMA, water dispersion of butyl acrylate and methacrylic acid copolymer (Lacryl 41), vinyl chloride, vinylidene chloride and maleic acid copolymer latex VDVHMk-65e-vdk, and others.

Said fire retardant additives used in the paint according to the invention comprise such additives as, for example, phosphorus compounds, such as ammonium polyphosphate, aluminum or magnesium hydroxides, microtalc, muscovite mica, calcium metasilicate.

The paint is obtained by dispersing the components in a mixer whose working member has a rotation speed not more than 300 revolutions per minute.

The coating is applied to different surfaces using a brush or a paint airless sprayer.

In Tables 1 and 2 below examples are given of the paints according to the invention and the properties of the resulting coatings.

**Table 1**

| Examples of the paint compositions according to the invention | | | | | | | | | |
|---|---|---|---|---|---|---|---|---|---|
| Ingredient | Ratio of ingredients according to examples, wt. % | | | | | | | | |
| | 1 | 2 | 3 | 4 | 5 | 6 | 7 | 8 | 9 |
| 1. Binding agent | | | | | | | | | |
| Silicon resin (polymethylsil oxane) | 20 | - | - | - | - | - | - | - | - |
| Butyl methacrylate and methacrylic acid copolymer | - | 30 | - | - | - | - | - | - | - |
| High-modulus liquid sodium glass, M=4.0 | - | | 20 | - | - | - | - | - | - |
| Styrene-acrylic copolymer | - | | - | 30 | - | - | - | - | - |
| Organo-soluble polyurethane based on polyether and diphenylmethan e diisocyanate | - | | - | - | - | - | - | - | 30 |
| 2. Titanium dioxide | 5 | 2 | 5 | 5 | 5 | 2 | 5 | 5 | 5 |

| 3. Hollow microspheres | | | | | | | | | |
|---|---|---|---|---|---|---|---|---|---|
| 20 µm | 20 | - | 30 | 20 | - | 18 | - | 30 | - |
| 150 µm | - | 30 | - | - | 30 | - | 10 | - | 10 |

| 4. Fire retardant additive | | | | | | | | | |
|---|---|---|---|---|---|---|---|---|---|
| Ammonium polyphosphate | 25 | - | - | 15 | - | 10 | - | - | 25 |
| Calcium metasilicate | - | 10 | - | - | - | - | - | 25 | - |
| Aluminum hydroxide | - | - | 15 | - | - | - | 25 | - | - |
| Muscovite mica | - | - | - | - | 5 | - | - | - | - |

| 5. Solvent | | | | | | | | | |
|---|---|---|---|---|---|---|---|---|---|
| Water | 30 | - | 30 | 30 | 30 | - | - | 20 | - |
| Butyl acetate | - | - | - | - | - | 30 | 15 | - | - |
| Acetone | - | - | - | - | - | - | 15 | - | 20 |
| Ethyl acetate | - | 28 | - | - | - | - | - | - | 10 |

**Table 2**

| Properties of the coatings based on the heat reflecting moisture-proof paint | | |
|---|---|---|
| 1. | Rupture strength, MPa | 2.9 |
| 2. | Compression strength, MPA | 3.7 |
| 3. | Water absorption by volume, % | 1.7 |
| 4. | Coating adhesion to steel, MPa | 0.75 |
| 5. | Coating adhesion to concrete, MPa | 1.2 |
| 6. | Coating adhesion to wood, MPa | 1.1 |
| 7. | Environmental resistance under exposure to the atmosphere of cold-moderate temperate climate, years | 10 |
| 8. | Coating adhesion to steel after environmental tests, MPa | 0.77 |

Averaged properties are given in Table 2 for all examples.
Coating paint heat conductivity: 0.046 Wt/mC;
Operating temperature range: -60°C to 200°C;
Coating paint service life: at least 10 years;

Therefore, the coating paint is provided which offers heat insulation, as well as sound-proofing, waterproofing and anticorrosion properties and having a wide field of application.

The coating paint may be applied to the surfaces of any form of equipment, pipelines, metal, concrete, reinforced concrete, brick, wooden and other building structures of residential, communal and industrial buildings and facilities.

The coating paint has a very wide range of application including but not limited to:
- oil refining, transportation and storing of oil and oil products;
- industrial supply lines (including pipelines, steam pipelines, air conduits);
- water supply (water storage and transportation tanks and cisterns, potable water storage cisterns);
- heating systems (water heaters for hot water, etc.);
- aircraft industry (aircraft interior walls);
- ship-building industry (ship hulls);
- automotive industry (interior parts of the bus bodies, engine compartments, decks of motor-cars, trailers, caravans, refrigerated trucks);
- chemical industry (nitrogen storage containers and the like);
- industrial construction (reflective walls in the steelcasting foundries, hangar roofs and upper parts of the factory-type roofs, exterior parts of partitions, apron walls, fore-roofs, garages, piles driven in permafrost, air conditioning systems, etc.);
- housing construction (corrugated top roof parts, tile roofing, metal roofs, etc, accommodation room walls and interior walls of the old buildings, etc.);
- military-industrial complex (various military facilities);
- construction of the motor-road and railroad bridges (reduced cold penetration);
- fire-fighting systems (to prevent sweating in pipes, etc.).

At the same time, the inventive coating offers good sound-proofing properties, i.e. serves as a sound-absorbing coating which is particularly important when used for building houses.

The term "coating paint" as used herein, is traditionally used at present, especially, in the field of constructive activities and refers to quiet viscous paint materials, such as mastics, fillers, etc.

## Claims

1. A heat-reflecting moisture-proof coating paint which includes binding agents, hollow microspheres, titanium dioxide, and a solvent, wherein said binding agent is selected from the group consisting of silicon resin, acrylic (co)polymers, polyurethane, high-modulus sodium or potassium glass, said hollow microspheres comprise hollow ceramic or glass microballoons of the size of 20-150 µm, said solvent comprises water or an organic solvent, said composition further includes a fire retardant additive, and the components are provided in the following wt. % ratio:
- binding agents - 20-30;
- hollow microspheres - 10-30;
- titanium dioxide - 2-5;
- fire retardant additive - 5-25;
- water or organic solvent - the balance.
